(19) Europäisches Patentamt
European Patent Office
Office européen des brevets

(11) Veröffentlichungsnummer: **0 017 114**
**A2**

# (12) EUROPÄISCHE PATENTANMELDUNG

(21) Anmeldenummer: **80101523.1**

(22) Anmeldetag: **22.03.80**

(51) Int. Cl.$^3$: **C 09 B 45/01**
C 09 B 45/06, C 09 B 45/16
D 06 P 3/04

(30) Priorität: **05.04.79 DE 2913719**

(43) Veröffentlichungstag der Anmeldung:
**15.10.80 Patentblatt 80/21**

(84) Benannte Vertragsstaaten:
**CH DE FR GB**

(71) Anmelder: **BAYER AG**
**Zentralbereich Patente, Marken und Lizenzen**
**D-5090 Leverkusen 1, Bayerwerk(DE)**

(72) Erfinder: **Linhart, Karl, Dr.**
**Heymannstrasse 65**
**D-5090 Leverkusen 1(DE)**

(72) Erfinder: **Scholl, Walter, Dr.**
**Bilharzstrasse 22**
**D-5000 Köln 80(DE)**

(72) Erfinder: **Gleinig, Harald, Dr.**
**Eichholzer Weg 100**
**D-5068 Odenthal(DE)**

(54) **Verfahren zur Herstellung von konzentrierten Lösungen von 1:2-Metallkomplex-Farbstoffen und deren Verwendung zum Färben und Bedrucken von natürlichen und synthetischen Polyamiden.**

(57) Konzentrierte, wasserlösliche Stammlösungen von 1:2-Chromkomplexen von Azo- oder Azomethinfarbstoffen erhält man durch Chromierung der metallfreien Farbstoffe in einem Lösungsmittelgemisch aus Wasser und einem wassermischbaren mehrwertigen Alkohol, dessen Äther oder Ester sowie gegebenenfalls organischen Basen und weiteren wassermischbaren Lösungsmitteln mit Verbindungen des 6-wertigen Chroms in Gegenwart reduzierend wirkender Mittel.

EP 0 017 114 A2

Croydon Printing Company Ltd.

0017114

BAYER AKTIENGESELLSCHAFT
Zentralbereich
Patente, Marken und Lizenzen

5090 Leverkusen, Bayerwerk
My-mo-Kü

Verfahren zur Herstellung von konzentrierten Lösungen von 1:2-Metallkomplex-Farbstoffen und deren Verwendung zum Färben und Bedrucken von natürlichen und synthetischen Polyamiden.

Gegenstand der vorliegenden Erfindung ist ein Verfahren zur Herstellung konzentrierter Lösungen von 1:2 Cr-Komplexen von Azo- oder Azomethinfarbstoffen, enthaltend 10-40 % (bezogen auf das Gewicht der Lösung) Farbstoff und 90-60 % eines Lösungsmittelgemisches bestehend aus einem wassermischbaren mehrwertigen Alkohol, dessen Äther oder Ester, vorzugsweise solchen der Formel

$$R_1 - O - (CH_2 - \underset{\underset{R_2}{|}}{CH} - O-)_X H \qquad (I),$$

wobei $R_1$ = H, $C_1$-$C_8$-Alkyl, $C_1$-$C_4$-Alkyl-carbonyl;
$R_2$ = H, $CH_3$
X = 1 - 10

und Wasser sowie ggf. weiteren üblichen, wassermischbaren Lösungsmitteln und/oder organischen Basen, das dadurch gekennzeichnet ist, daß man die metallfreien Farbstoffe in dem genannten Lösungsmittelgemisch mit Verbindungen des 6-wertigen Chroms in Gegenwart reduzierend wirkender Mittel chromiert.

Bevorzugte Lösungen enthalten - bezogen auf das Gewicht des Lösungsmittelgemisches- 6-42% eines wassermischbaren mehrwertigen Alkohols, dessen Äther oder Ester und 94-58% Wasser sowie gegebenenfalls 0-20% eines weiteren wassermischbaren Lösungsmittels.

Die Chromierung wird vorzugsweise bei Anfangs-pH-Werten $\leq 9$, vorzugsweise bei 8 - 8,5, bei erhöhter Temperatur, insbesondere 80-120 $^{\circ}C$, insbesondere bei etwa 98 - 105 $^{\circ}C$, durchgeführt.

Die Einstellung des pH-Wertes erfolgt dabei durch Zugabe basischer Verbindungen, insbesondere Alkalihydroxiden oder Alkalicarbonaten, vorzugsweise von Lithiumhydroxid oder organischen Basen, insbesondere Mono-, Di- oder Trialkanolaminen wie Triäthanolamin oder entsprechenden quartären Basen.

Ganz generell sind solche Lösungen bevorzugt, in denen die Farbstoffe - zumindest anteilweise - als Lithiumsalze vorliegen. Solche Lösungen erhält man entweder wie oben angegeben durch Chromierung in Gegenwart von LiOH und/oder im Falle sulfogruppenhaltiger Farbstoffe durch Einsatz der Li-Salze der Farbstoffe.

Die zu chromierenden Farbstoffe brauchen vor der Chromierung nicht getrocknet zu werden, sie werden vorzugsweise als wäßrige Pasten zur Chromierung verwendet.

Die Herstellung der Stammlösungen kann weiter vereinfacht werden, indem man Kupplung und anschließende Chromierung in einem Eintopf-Verfahren ausführt.

Dabei kann man in der Weise verfahren, daß man die Bildung des o,o'-Dihydroxy-azo- bzw. -methinfarbstoffs in Wasser vornimmt und dann nach beendeter Bildung des o,o'-Dihydroxy-Farbstoffs das organische Lösungsmittel zugibt und bei erhöhter Temperatur mit Chrom-VI-Salzen in Gegenwart von beispielsweise reduzierenden Kohlehydraten chromiert.

Man kann aber auch die Bildung des o,o'-Dihydroxyazo- bzw. -methinfarbstoffs in Gegenwart des organischen Lösungsmittels, insbesondere solchen der Formel (I), ausführen und anschließend mit 6-wertigen Chromsalzen und reduzierend wirkenden Kohlehydraten chromieren.

Als Chrom-VI-Salze kommen vorzugsweise Natriumdichromat, Kaliumdichromat oder $Li_2Cr_2O_7$ zur Anwendung; als reduzierende Verbindungen werden beispielsweise Hydrazin, $Na_2S$ oder NaHS, insbesondere aber Kohlenhydrate, vorzugsweise Traubenzucker, verwendet.

Das Chromierungsmittel wird vorzugsweise in stöchiometrischen Mengen eingesetzt.

Die Ausbeute an Farbstoff ist fast quantitativ. Die Farbstofflösung enthält nur ganz geringe Mengen freies Chrom.

Als Lösungsmittel der Formel (I) kommen in Betracht: Äthylenglykol, Propylenglykol, Butylenglykol sowie deren Monomethyl-, Monoäthyl- bzw. Monobutyläther oder Monoacetate,

Diäthylenglykol und dessen Mono-$C_1$-$C_6$-alkyläther bzw. dessen Monoester mit aliphatischen Carbonsäuren, insbesondere Essigsäure.

Im einzelnen seien besonders genannt: Äthylenglykol, Diäthylenglykol, Triäthylenglykol und insbesondere Methylglykol, Äthylglykol, Butylglykol, Methyldiglykol und Butyldiglykol. Es können selbstverständlich auch Mischungen der genannten Lösungsmittel verwendet werden.

Das Verfahren eignet sich besonders für folgende Farbstoffklassen: o,o'-Dihydroxyazo- oder -azomethinfarbstoffe, insbesondere Monoazofarbstoffe der Bezol-azo-benzolreihe, Benzolazonaphthalinreihe, Naphthalin-azo-naphthalinreihe, Benzol-azo-acetessigarylidreihe, insbesondere für solche Farbstoffe der oben genannten Art, die eine oder mehrere Sulfonsäuregruppen enthalten. Unter diesen Farbstoffen sind solche mit 1 Sulfonsäuregruppe bevorzugt und unter diesen wiederum solche der Formel (II)

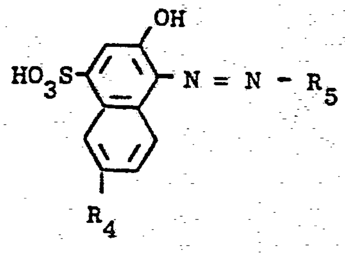

(II)

wobei $R_4$ ein Wasserstoffatom oder eine Nitrogruppe bedeutet und $R_5$ für Reste der Formeln

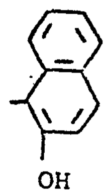

oder

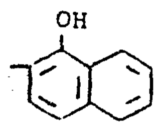

steht.

Weiterhin sind Farbstoffe der obengenannten Art bevorzugt, die frei von Sulfo- und Carboxygruppen sind, jedoch eine hydrophilierende Gruppe aufweisen, z.B. eine ggf. substituierte Sulfoamidgruppe, eine Alkylsulfongruppe, eine Arylsulfongruppe oder eine Acylaminogruppe bspw. eine Alkylcarbonylaminogruppe oder eine Alkylsulfonylaminogruppe.

Die Stammlösungen eignen sich hervorragend zum Bedrucken und Färben von natürlichen und synthetischen Polyamiden, wie Wolle, Seide, Leder, Polyamid-6, Polyamid-6,6, Polyamid-6,10 usw.

Die Stammlösungen sind stabil. Sie enthalten praktisch kein freies Chrom; die Chromierung des o,o'-Dihydroxyazo- bzw. Azomethinfarbstoffs verläuft praktisch quantitativ.

Bevorzugt sind ganz generell solche Lösungen, die ≤25 % Lösungsmittel (I) bezogen auf das Gewicht der Stammlösung enthalten.

Beispiel 1:

1.094,8 g in üblicher Weise sauer isolierte wäßrige Paste, die 1 Mol o,o'-Dihydroxyazofarbstoff enthält, hergestellt durch Kuppeln der 6-Nitro-2-naphthochinon-1-diazid-4-sulfonsäure mit ß-Naphthol, werden in 450 ml Äthylglykol verrührt, auf Siedetemperatur erwärmt und mit $LiOH \cdot H_2O$ auf pH 8,0 - 8,5 gestellt. Dann lässt man eine Lösung aus 74,5 g $Na_2Cr_2O_7 \cdot 2\ H_2O$, 50 g Traubenzucker und 200 ml Wasser in 15 Minuten zulaufen und rührt noch 45 Minuten nach.

Die erhaltene Lösung kann beliebig mit Wasser verdünnt werden, ist lagerbeständig und färbt Wolle in schwarzen Tönen mit guten Echtheiten.

Ähnlich stabile Lösungen erhält man bei Verwendung der auf Seite 3 angegebenen Lösungsmittel, z.B. Butylglykol.

Beispiel 2:

1.386,6 g in üblicher Weise salzsauer isolierte wäßrige Paste, die 1 Mol o,o'-Dihydroxyazofarbstoff enthält, hergestellt durch Kuppeln der 2-Naphtochinon-1-diazid-4-sulfonsäure mit ß-Naphthol, werden mit 550 ml Äthylglykol verrührt, auf 100°C erwärmt und mit $LiOH \cdot H_2O$ auf pH 7,5 - 8,5 eingestellt. Dann läßt man in 10 Minuten eine Lösung aus 74,5 g $Na_2Cr_2O_7 \cdot 2H_2O$, 50 g Traubenzucker und 200 ml Wasser zulaufen und rührt noch 30 Minuten bis zur Beendigung der Chromierung nach.

Die erhaltene Lösung ist lagerbeständig, kann mit Wasser beliebig verdünnt werden und färbt Wolle in blauen Farbtönen mit guten Echtheiten.

Beispiel 3:

1.372,8 g in üblicher Weise salzsauer isolierte wäßrige Paste, die 1 Mol o,o'-Dihydroxyazofarbstoff enthält, hergestellt durch Diazotieren von 4-Chlor-6-Nitro-2-aminophenol, Kuppeln auf 1-(2',6'-Dimethyl-3'-sulfamid)-phenyl-3-methyl-5-pyrazolon und Isolieren bei pH 9,5, werden mit 588 ml Wasser, 800 ml Äthylglykol und 149 g Triäthanolamin (1 Mol) 2 Stunden bei 65°C verrührt (pH = 9). Dann erhitzt man die Suspension zum Sieden, läßt in 15 Minuten eine Lösung von 74,5 g $Na_2Cr_2O_7 \cdot 2H_2O$, 50 g Traubenzucker und 200 ml Wasser zutropfen und rührt 1 Stunde unter Rückfluß nach. Nach dem Abkühlen auf Zimmertemperatur wird geklärt.

Die erhaltene Lösung färbt Wolle in roten Farbtonen mit guten Echtheiten.

Beispiel 4:

1.105 g in üblicher Weise isolierte wäßrige Farbstoffpaste mit einem Farbstoffgehalt von 40 % an 2-Aminophenol-4-sulfonamid ⟶ 1(2',5'-Dichlorphenyl)-3-methyl-5-pyrazolon, hergestellt durch Kuppeln von diazotiertem 2-Aminophenol-4-sulfonamid auf 1( 2,5'-Dichlorphenyl)-3-methyl-5-pyrazolon und Isolieren bei pH 6, werden mit 500 ml

Äthylglykol verrührt und mit $LiOH \cdot H_2O$ auf pH 9 gestellt und zum Rückfluß erhitzt. Dann läßt man in 20 Minuten eine Lösung von 74,5 g $Na_2Cr_2O_7 \cdot 2\ H_2O$, 50 g Traubenzucker und 300 ml Wasser zulaufen und rührt 1 Stunde unter Rückfluß nach. Nach Beendigung der Chromierung wird geklärt.

Man erhält eine Farbstofflösung, die Wolle und Polyamid in orangen Tönen mit guten Echtheitseigenschaften färbt.

Patentansprüche:

1. Verfahren zur Herstellung von konzentrierten wasserlöslichen Stammlösungen von 1:2-Cr-Komplexen von Azo- oder Azomethinfarbstoffen, enthaltend 10 - 40 % (bezogen auf das Gewicht der Stammlösung) Farbstoff und 90 - 60 % eines Lösungsmittelgemisches, bestehend aus einem wassermischbaren mehrwertigen Alkohol, dessen Äther oder Ester und Wasser sowie ggf. weiteren üblichen wassermischbaren Lösungsmitteln und/oder organischen Basen, dadurch gekennzeichnet, daß man die metallfreien Farbstoffe in dem genannten Lösungsmittelgemisch mit Verbindungen des 6-wertigen Chroms in Gegenwart reduzierend wirkender Mittel chromiert.

2. Verfahren nach Anspruch 1, dadurch gekennzeichnet, daß man als mehrwertige Alkohole bzw. deren Äther oder Ester solche der Formel

$$R_1\text{-O-}(CH_2\text{-}\underset{\displaystyle R_2}{\underset{|}{C}}H\text{-O})_xH$$

verwendet, worin
$R_1$ = H, $C_1$-$C_8$-Alkyl, $C_1$-$C_4$-Alkylcarbonyl
$R_2$ = H, $CH_3$
X = 1-10

3. Verfahren nach Ansprüchen 1 und 2, dadurch gekennzeichnet, daß man bei pH-Werten $\leq$ 9, vorzugsweise

8-8,5 und Temperaturen von 80-120°C chromiert.

4. Verfahren nach Ansprüchen 1-3, dadurch gekennzeichnet, daß man in Gegenwart von Alkalihydroxiden, Alkalicarbonaten, Mono-, Di- oder Trialkanolaminen chromiert.

5. Verfahren nach Ansprüchen 1-4, dadurch gekennzeichnet, daß man in Gegenwart von LiOH und/oder im Falle sulfogruppenhaltiger Farbstoffe, die Li-Salze der Farbstoffe chromiert.

6. Verfahren nach Ansprüchen 1-5, dadurch gekennzeichnet, daß man Kupplung und Chromierung im Eintopfverfahren durchführt.

7. Verwendung der nach Ansprüchen 1-6 hergestellten Lösungen zum Färben und Bedrucken von natürlichen und synthetischen Polyamiden.